(19) Europäisches Patentamt
European Patent Office
Office européen des brevets

(11) **EP 1 841 203 A1**

(12) **EUROPEAN PATENT APPLICATION**

(43) Date of publication:
**03.10.2007 Bulletin 2007/40**

(51) Int Cl.:
*H04N 3/20* (2006.01)　　*H04N 5/44* (2006.01)
*G09G 3/28* (2006.01)

(21) Application number: **07006437.3**

(22) Date of filing: **28.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **30.03.2006 JP 2006094112**

(71) Applicant: **Pioneer Corporation
Tokyo 153-8654 (JP)**

(72) Inventor: **Nagaoka, Shiro
Tokyo 143-8564 (JP)**

(74) Representative: **Grünecker, Kinkeldey,
Stockmair & Schwanhäusser
Anwaltssozietät
Maximilianstrasse 58
80538 München (DE)**

(54) **Image signal processing apparatus, image system and method of processing image signal**

(57)　　Providing an image signal processing apparatus, in which burn-in of a display can be ignorable and power consumption can be reduced, when a blank datum for a blank area in an image signal is detected by a blank area detecting unit, an image signal processing unit processes the image signal so as to interpose a brightness gradation area between an image area and the blank area. Brightness in the brightness gradation area changes gradually between the image area and the blank area.

# FIG. 1

EP 1 841 203 A1

**Description**

BACKGROUND OF THE INVENTION

Field of the Invention

This invention relates to an image signal processing apparatus, an image system, and a method of processing an image signal, according to execute image processing for the image signal, which includes respectively one of various aspect ratios.

Description of the Related Art

In the present television broadcasting, there exist broadcasting for SDTV (Standard Definition Television) with an aspect ratio of 4:3 and broadcasting for HDTV (High Definition Television) with an aspect ratio of 16:9. In the broadcasting for HDTV, when an image signal for SDTV with the aspect ratio of 4:3 is broadcasted, the image signal converted into an image signal with the aspect ratio of 16:9 at a broadcast station is broadcasted. Thereby, when the converted image signal is received by a television receiver for HDTV. an image with the aspect ratio of 4:3 is displayed in the center, as an image area, of a display of the television receiver for HDTV and a black color blank is displayed respectively at a right side and a left side of the image, as a blank area.

When the image and the blank are displayed respectively in the image area and the blank area on fluorescent material, brightness thereof will be decreased by degradation of the fluorescent material so that difference of brightness between the image area and the blank area caused by burn-in can be visualized.

A television receiver capable to prevent such burn-in is proposed (refer Patent Document 1). According to the above television receiver, by detecting average brightness in the image area, the brightness in the blank area is determined based on the average brightness. Thus, the burn-in is prevented by determining the brightness in the blank area corresponding to the average brightness in the image area. The Patent Document 1 is Japan Patent Published Application 2005-323147.

SUMMARY OF THE INVENTION

Objects to be solved

According to the above television receiver, since the brightness of the blank area changes, visual impression is strange, and since the blank area is made bright, power consumption is increased. A television receiver, which displays gray pattern or a picture in the blank area, is provided. However, issues of burn-in and power consumption still exist. A television receiver, which displays plural image areas on the display, has the same issues.

According to the above problem, an object of the present invention is to provide an image signal processing apparatus, an image system, and a method of processing an image signal, which can make burn-in of a display ignorable and reduce power consumption.

How to attain the object of the present invention

In order to overcome the above problems and attain the object of the present invention, an image signal processing apparatus is characterised in that the image signal processing apparatus, which executes image processing for an image signal including an image datum for an image displayed in an image area on a display and a blank area datum for a blank displayed in a blank area other than the image area on the display, includes a blank area detecting unit for detecting the blank area datum of the image signal; and an image signal processing unit for processing the image signal so as to provide a brightness gradation area between the image area and the blank area on the display, and brightness in the brightness gradation area changes gradually between the image area and the blank area corresponding to detection of the blank area datum by the blank area detecting unit.

An image system according to the present invention is characterised in that the image system includes an image signal processing apparatus mentioned above and a display unit for displaying the image by the image signal processed by the image signal processing apparatus.

A method of processing an image signal according to the present invention is characterised in that the method of processing the image signal, which includes an image datum for an image displayed in an image area on a display and a blank area datum for a blank displayed in a blank area other than the image area on the display, includes the steps of detecting the blank area datum of the image signal; and processing the image signal so as to provide a brightness gradation area between the image area and the blank area on the display, and brightness in the brightness gradation area changes gradually between the image area and the blank area on the display, and brightness in the brightness gradation area changes gradually between the image area and the blank area.

The above and other objects and features of this invention will become more apparent from the following description taken in conjunction with the accompanying drawings.

BRIEF DESCRIPTION OF THE DRAWINGS

Fig. 1 is a basic block diagram of an embodiment of an image signal processing apparatus and an image system according to the present invention;

Fig. 2 is a block diagram of an example of the image signal processing apparatus and the image system shown in Fig. 1;

Fig. 3 is an illustration of a first example of a 16:9 display of a display unit shown in Fig.1;

Fig. 4 is a an illustration of a second example of the 16:9 display of the display unit shown in Fig.1;

Fig. 5 is an illustration of blocks in the 16:9 display shown in Figs. 3, 4;

Fig. 6 is a graph of a relation of an expected brightness and an operating time about the display unit shown in Fig. 2; and

Fig. 7 is a flow chart of an example of a process of reducing burn-in, which is executed by a control unit of the image signal processing apparatus shown in Fig. 2.

DESCRIPTION OF THE PREFERRED EMBODIMENT

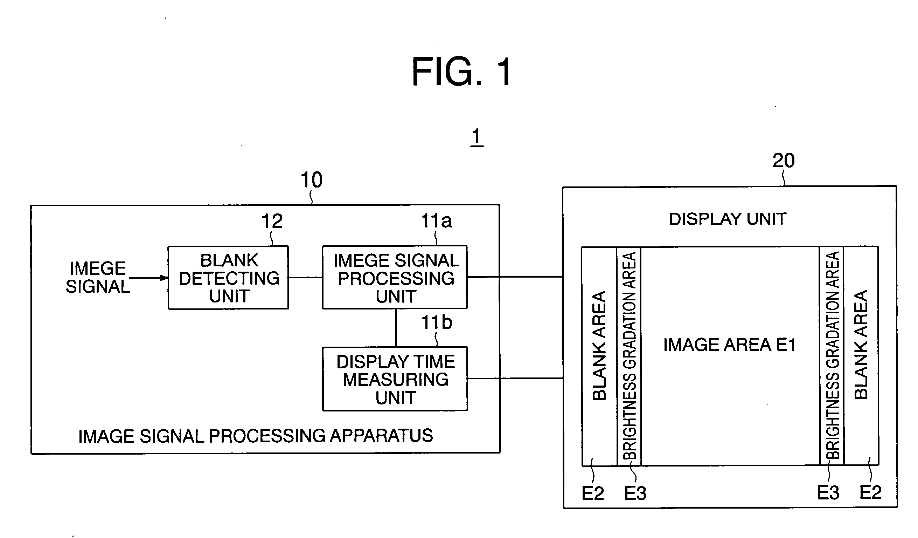

Each preferred embodiment of an image signal processing apparatus, an image system, and a method of processing an image signal according to the present invention will be described as followings with reference to Fig. 1. Fig. 1 is a block diagram showing basic structures of the image signal processing apparatus according to the present invention and a television receiver.

According to Fig. 1, an image signal processing apparatus 10, which executes image processing for an image signal including an image datum for an image displayed in an image area E1 on a display and a blank area datum for a blank displayed in a blank area E2 other than the image area E1 on the display, includes a blank area detecting unit 12 for detecting the blank area datum of the image signal; and an image signal processing unit 11 a for processing the image signal so as to provide a brightness gradation area E3 between the image area E1 and the blank area E2 on the display, and brightness in the brightness gradation area E3 changes gradually between, the image area E1 and the blank area E2 corresponding to detection of the blank area datum by the blank area detecting unit 12.

According to the image signal processing apparatus 10, when the blank area datum for the blank area E3 is detected in the image signal by the blank area detecting unit 12, the image signal is processed by the image signal processing unit 11 a so as to provide the brightness gradation area E3 between the image area E1 and the blank area E2 on the display, the brightness of which changes gradually between the image area E1 and the blank area E2.

Since the image signal is processed so as to provide the brightness gradation area E3 between the image area E1 and the blank area E2 when the blank area datum exists in the image signal, brightness between the image area E1 and the blank area E2 can be changed gradually by the brightness gradation area E3. Even if brightness of the display is reduced, a boundary between the image area E1 and the blank area E2 can be ignorable. Since the brightness in the brightness gradation area E3 is changed, power consumption can be reduced. Thus, difference of brightness degradation by burn-in can be ignorable and power consumption can be reduced. The brightness gradation area E3 performs an area for making the difference of brightness degradation ignorable.

In the image signal processing apparatus 10, the image signal processing unit 11 a processes the image signal so as to decrease the brightness of the brightness gradation area E3 gradually from a bright zone to a dark zone in the brightness gradation area E3.

In the image signal processing apparatus 10, the image signal is processed so as to provide the brightness gradation area E3 between the image area E1 and the blank area E2, the brightness of which decreases gradually from the bright zone to the dark zone in the brightness gradation area E3.

When the brightness gradation area E3 is provided between the image area E1 and the blank area E2, since the brightness of the brightness gradation area E3 decreases gradually from the bright zone to the dark zone, strange looks by the boundary between the image area E1 and the blank area E2 can be prevented.

In the image signal processing apparatus 10, the image signal processing unit 11 a processes the image signal so as to provide the brightness gradation area E3 from the boundary between the image area E1 and the blank area E2 into the image area E1.

In the image signal processing apparatus 10, the image signal is processed so as to provide the brightness gradation area E3 from the boundary between the image area E1 and the blank area E2 into the image area E1.

Since the brightness gradation area E3 is provided from the boundary between the image area E1 and the blank area E2 into the image area E1, it is not required to brighten the blank area E2 and power consumption can be reduce more.

In the image signal processing apparatus 10, the image signal processing unit 11 a processes the image signal- so as to provide the brightness gradation area E3 from the boundary between the image area E1 and the blank area E2 into the blank area E2.

In the image signal processing apparatus 10, the image signal is processed so as to provide the brightness gradation area E3 from the boundary between the image area E1 and the blank area E2 into the blank area E2.

Since the brightness gradation area E3 is provided from the boundary between the image area E1 and the blank area E2 into the blank area E2, the image area E1 is not processed and only the blank area E2 is processed. The boundary between the image area E1 and the not-brightened blank area E2 can become more ignorable.

The image signal processing apparatus 10 further includes a display time measuring unit 11 b for measuring each accumulated display time of displaying the image area E1 and the blank area E2 in the image signal, and the image signal processing unit 11 a processes the image signal so as to control the brightness in the brightness gradation area E3 based on the accumulated display time measured by the display time measuring unit 11 b.

In the image signal processing apparatus 10, the display time measuring unit 11 b measures accumulated display times of displaying the image area E1 and the blank area E2 in the image signal, and the image signal processing unit 11 a processes the image signal so as to control the brightness in the brightness gradation area E3 based on the accumulated display times measured by the display time measuring unit 11 b and provide the brightness gradation area E3 between the image area E1 and the blank area E2.

Since each accumulated display time of displaying the image area E1 and the blank area E2 in the image signal is measured, and the brightness in the brightness gradation area E3 is controlled based on the accumulated display time, even if brightness of the display is reduced by use for a long time, the brightness of the brightness gradation area E3 can be controlled corresponding to the reduced brightness. Thereby, the brightness gradation area E3 suitable for the display can be provided between the image area E1 and the blank area E2, so that the boundary between the image area E1 and the blank area E2 can become more ignorable.

The image system 1 includes an image signal processing apparatus 10 mentioned above, and a display unit 20 for displaying the image by the image signal processed by the image signal processing apparatus 10.

In the image system 1, the image signal processing apparatus 10 processes the image signal so as to provide the brightness gradation area E3 between the image area E1 and the blank area E2, and a display unit 20 displays the image by the image signal.

Since the display unit 20 displays the image by the image signal processed by the image signal processing apparatus 10 so as to provide the brightness gradation area E3 between the image area E1 and the blank area E2, the brightness between the image area E1 and the blank area E2 can be reduced gradually by the brightness gradation area E3. Thereby, when the brightness of the display unit 20 is reduced, the boundary between the image area E1 and the blank area E2 can be ignorable. Since the brightness of the brightness gradation area. E3 is reduced gradually, power consumption can be reduced. Thus, difference of brightness degradation by burn-in can be ignorable and power consumption can be reduced.

A method of processing an image signal, which includes an image datum for an image displayed in an image area E1 on a display and a blank area datum for a blank displayed in a blank area E2 other than the image area E1 on the display, includes the steps of detecting the blank area datum of the image signal, and processing the image signal so as to provide a brightness gradation area E3 between the image area E1 and the blank area E2 on the display, brightness in which changes gradually between the image area E1 and the blank area E2.

According to the method of processing the image signal, when the blank area datum of the image signal is detected, the image signal is processed so as to provide the brightness gradation area E3 between the image area E1 and the blank area E2 on the display, brightness in which changes gradually between the image area E1 and the blank area E2.

Since the image signal is processed so as to provide the brightness gradation area E3 between the image area E1 and the blank area E2 on the display when the blank area datum exist in the image signal, the brightness between the image area E1 and the blank area E2 can be changed gradually by the brightness gradation area E3. Thereby, when the brightness of the display unit is reduced, the boundary between the image area E1 and the blank area E2 can be ignorable. Since the brightness of the brightness gradation area E3 is reduced gradually, power consumption can be reduced. Thus, difference of brightness degradation by burn-in can be ignorable and power consumption can be reduced.

EMBODIMENT

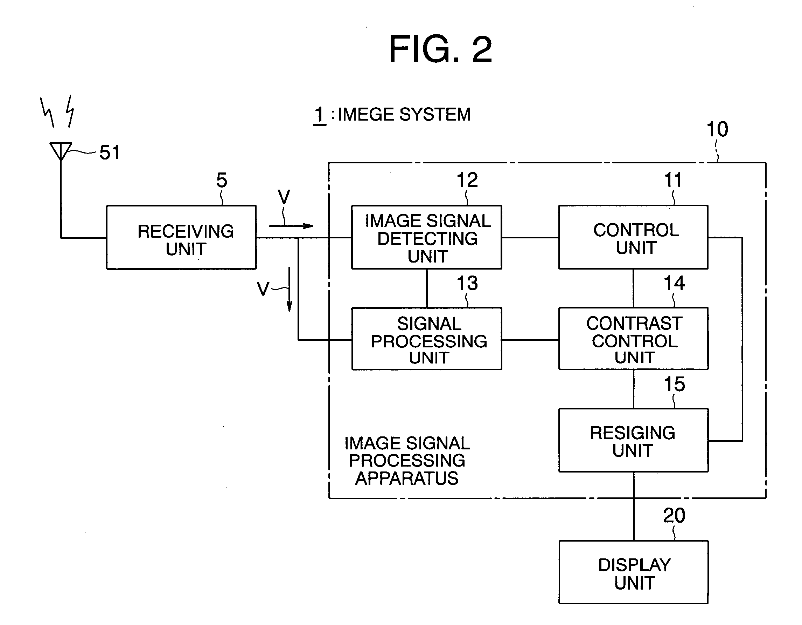

One embodiment of an image signal processing apparatus and an image system according to the present invention will be described with reference to Figs. 2-5. The same parts and corresponding parts as that in above description are put with the same marks.

In Fig. 2, the image system 1 receives broadcasting for SDTV (Standard Definition Television) with aspect ratio of 4:3 and broadcasting for HDTV (High Definition Television) with aspect ratio of 16:9, and display an image by an image signal of the broadcasting. The image system 1 includes a receiving unit 5, an image signal processing apparatus 10, and a display unit 20 displaying the image by the image signal processed by the image signal processing apparatus 10.

The embodiment, in which the image system is a television receiver, is described. According to the embodiment, not only the television receiver, but also a monitor display (display unit without a tuner), a television tuner connected thereto, a STB (Set Top Box), and a record/playback device can be applied to the image system 1.

The receiving unit 5.receives a broadcasting signal, which is transmitted from a satellite and a broadcasting station and received by an antenna 51 provided in the open air, and outputs an image signal in the broadcasting signal to the image signal processing apparatus 10. An audio signal is not related to the present invention, so that description about the audio signal is omitted.

The image signal processing apparatus 10 includes a control unit 11, an image signal detecting unit 12, a signal processing unit 13, a contrast control unit 14, and a resizing unit 15.

The control unit 11 controls the image signal processing apparatus totally. The control unit 11 includes a well-known micro-processor. The control unit 11 stores various programs to perform as an image signal processing unit and a display time measuring unit at the image signal processing apparatus 10 in a built-in memory (not shown). The control unit 11 is connected to the image signal detecting unit 12, the contrast control unit 14 and the resizing unit 15.

The image signal detecting unit 12 detects degree of brightness of an image signal V inputted from the receiving unit 5. It is detected based on the degree of brightness which the image signal V has a format of displaying image with aspect ratio of 4:3 or aspect ratio of 16:9 or letter box (LB). The LB is a format to display a width of the image fitted to a width of a CRT (cathode-ray tube) and black areas for remained blanks at up and down sides of the image.

The image signal detecting unit 12 detects an datum of boundary in signal, which correspond to a boundary between the image area E1 for displaying the image in the display and the blank area E2 located the area other than the image area E1, and outputs the datum of boundary to the control unit 11. The datum of boundary can have any format, in which the boundary between the image area E1 and the blank area E2 is capable to be detected.

The signal processing unit 13 is connected to the receiving unit 5 and the contrast control unit 14. The image signal V is inputted from the receiving unit 5 to the signal processing unit 13. The image signal V is the same image signal V inputted to the image signal detecting unit 12. The signal processing unit 13 executes various signal processes such as analogue/digital converting, decoding, Y (brightness)/C (carrier chrominance signal) separating for the image signal V and outputs the processed image signal V to the contrast control unit 14.

The contrast control unit 14 is connected to the control unit 11, the signal processing unit 13, and the resizing unit 15. The contrast control unit 14 adjusts contrast of the image signal V according to control of the control unit 11, and outputs the adjusted image signal V. When the control unit 11 requests the contrast control unit 14 to interpose the brightness gradation area E3, the contrast control unit 14 interposes the brightness gradation area E3 from the boundary between the image area E1 and the blank area E2 into the image area E1, that is from the boundary into the image area E1 to have a predetermined width. In this embodiment, the width of the brightness gradation area E3 is arranged in a range of 5-10 % of the image area E1. However, the range can be arranged freely.

The resizing unit 15 is connected to the control unit 11 and the contrast control unit 14. The resizing unit 15 converts the image signal V inputted from the contrast control unit 14 so as to fit to a number of pixels of the display of the display unit 20, and outputs the converted image signal V to the display unit 20. When the control unit 11 requests the resizing unit 15 to interpose the brightness gradation area E3, the resizing unit 15 interposes the brightness gradation area E3 from the boundary between the image area E1 and the blank area E2 into the blank area E2, that is from the boundary into the blank area E2 to have a predetermined width.

When the blank area E2 is detected from the image signal V inputted from the receiving unit 5, the image signal processing apparatus 10 structured above processes the image signal V to interpose the brightness gradation area E3 between the image area E1 and the blank area E2, the brightness in which changes gradually between the image area E1 and the blank area E2.

The display unit 20 is connected to the resizing unit 15. A light emitting display unit, such as a CRT (Cathode Ray Tube), and a PDP (Plasma Display Panel), is applied for the display unit 20. The display unit 20 has a possibility of the burn-in of the display caused by difference of aspect ration and brightness degradation. The display unit 20 displays the image by the image signal inputted from the resizing unit 15.

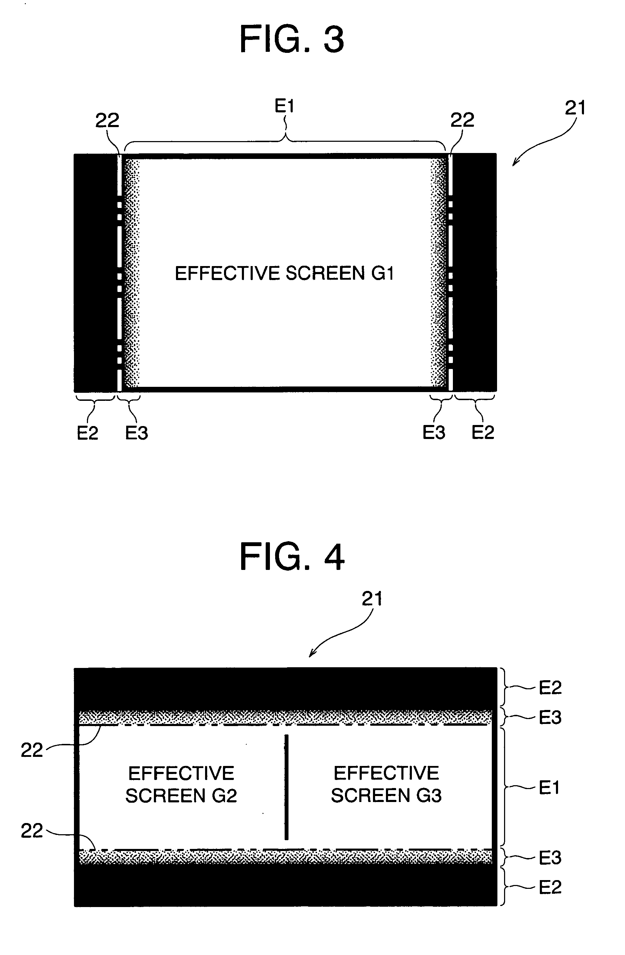

In this embodiment, one condition, in which the brightness gradation area E3 is interposed between the image area E1 and a black color blank area E2 as shown in Figs. 3, 4, is described.

On a 16:9 display 21 shown in Fig. 3, an effective screen G1 (4:3 screen) for displaying the image corresponds to the image area E1. The blank areas E2 are located respectively at a right side and a left side of the image area E1. The brightness gradation area E3 is provided respectively from the right and left boundaries 22 of the effective screen G1 into the image area E1. Thereby, it is not required to make the blank area E3 emit light, so that the power consumption can be more reduced.

In Fig. 4, two effective screens G2, G3 displaying two different images on the 16:9 display 21 correspond to the image area E1. The blank areas E2 are located respectively at a top side and a bottom side of the image area E1. The brightness gradation area E3 is provided respectively from the top and bottom boundaries 22 of the effective screens G2, G3 into the image area E1. Thereby, by processing only data of the blank area E2 not to process the image datum of the image area E1, the boundary between the image area E1 and the blank area E2 not to emit light can be more ignorable.

In the each brightness gradation area E3, the brightness decreases gradually from the image area E1 to the each blank area E2. Thus, the brightness decreases gradually from the bright image area E1 to the each dark blank area E2, so that strange looks by the brightness gradation area E3 provided between the image area E1 and the blank area E2 can be prevented. Thereby, the boundary between the image area E1 and the blank area E2 not to emit light can be more ignorable.

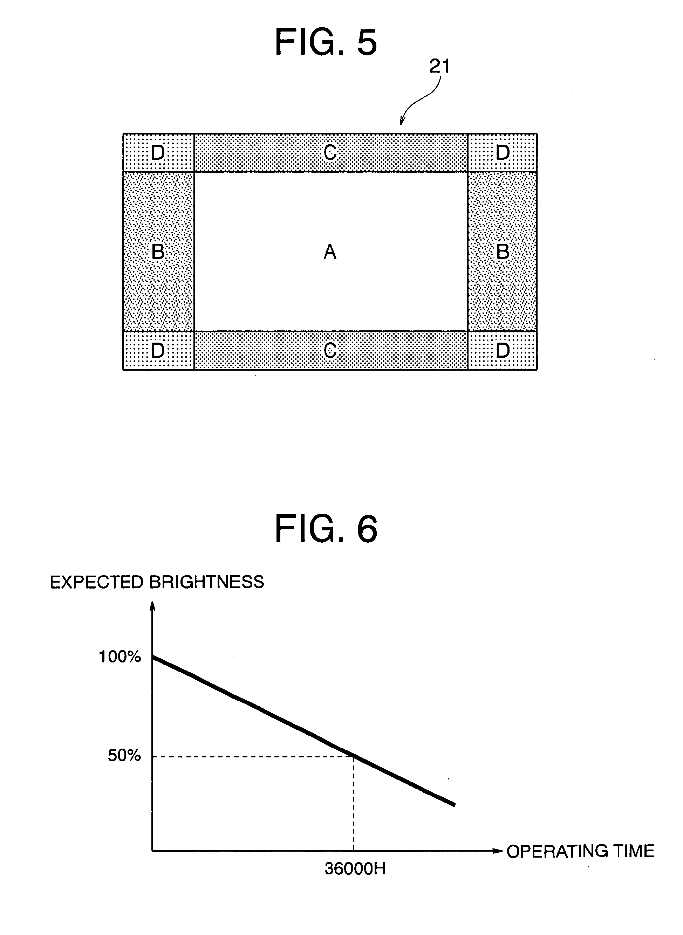

When the image by the image signal V is displayed on a display of the display unit 20, the aforesaid control unit 11 divides the 16:9 display 21 to plural blocks (4 in Fig. 5) corresponding to the image area E1 and the blank area E2, and assigns names A-D respectively to the blocks. as shown in Fig. 5. The control unit 11 accumulates (measures) display time for each block A-D. Thus, the control unit 11 performs a display time measuring unit.

In the display unit 20, the brightness is reduced by half to a 50% reduction after operating time of about 36000 hours (depending on a method of using or fluorescent material) in accordance with characteristics of brightness reduction of fluorescent material as shown in Fig. 6. Expected brightness about the each block A-D and each contrast value based on the expected brightness can be calculated by following equations. Relation of the expected brightness and the contrast value about each block A-D as an example is shown in Table 1. The relation shown in Table 1 is just one example of the expected brightness and the contrast value at a moment when using certain method, and does not show the expected brightness and the contrast value for all conditions.

$$\text{EB (Expected Brightness \%)} = (1 - (RBR/PBR)*(TDA-TNDB))*100 \qquad \text{Equation 1}$$

herein, RBR: Ratio of Brightness Reduction, PBR: Period for Brightness Reduction,
TDA: accumulated Time of displaying all Areas,
TNDB: accumulated Time of not displaying each Block during displaying all Areas

$$\text{Contrast Value (\%)} = ((\text{EB of block A}) / (\text{EB of objective block}))*100 \qquad \text{Equation 2}$$

Table 1

| Block | A | B | C | D |
|---|---|---|---|---|
| Expected Brightness | 58% | 65% | 65% | 72% |
| Contrast Value | 100% | 89% | 89% | 81 % |

Contrast values of respective areas are calculated based on the accumulated time of displaying each block A-D and the values of the brightness reduction caused by degradation of the fluorescent material so as to unify the brightness overall the 16:9 display 21. By expecting the brightness reduction based on the accumulated display time of displaying each block A-D as Table 1, and determining the brightness in the brightness gradation area E3 based on the expecting, the boundary between the image area E1 and the blank area E2 not to emit light can be more ignorable.

The gradation in the brightness gradation area E3 can be specified by one of various corrections, such as linear correction, gamma correction, reverse gamma correction, and s-shaping correction. The control unit 11 changes the contrast value gradually based on an original brightness of the image signal V to have the gradation in the brightness gradation area E3. The brightness gradation area E3 can be generated at a start-up of the image system 1 or at real time.

The aforesaid equations 1, 2 are just examples, and different calculating methods using following parameters can be considered for improving calculation accuracy:

a) Set values of the contrast and the brightness of the overall display
b) Contrast value of the blocks B-D to be displayed by reduced contrast

c) Average brightness value.

With regard to the boundary of each block A-D, the contrast values shall be adjusted so as to change the contrast between the adjacent blocks linearly. Correction shall be required for the brightness gradation area E3 since the brightness is changed gradually.

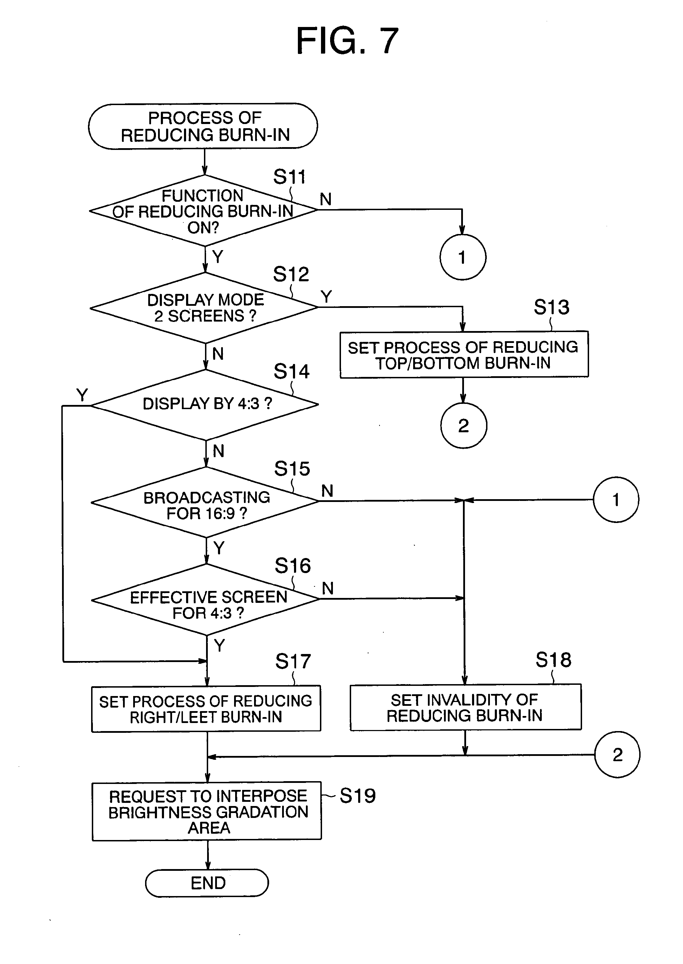

An example of a process of reducing burn-in, which is executed by the control unit 11, is described with reference to a flowchart in Fig. 7.

When the blank area datum of the blank area is detected in the image signal V by the image signal detecting unit 12, the control unit 11 executes the process of reducing burn-in shown in Fig. 7. In Step S11, it is judged whether or not a function of reducing burn-in is ON based on various setting data stored in a memory (not shown). When it is judged that the function is not ON (N in S11), the process proceeds to Step S18. When it is judged that the function is ON (Y in S11), the process proceeds to Step S12.

In Step S12, it is judged whether or not display mode is 2 effective-screens mode shown in Fig. 4. When it is judged that the mode is the 2 effective-screens mode (Y in S12), a process of reducing top/bottom burn-in is set in Step S13, and the process proceeds to Step S19. When it is judged that the mode is not the 2 effective-screens mode (N in S12), it is judged whether or not the display is by 4:3 aspect ratio in Step S14. When it is judged that the display is by 4:3 aspect ratio (Y in S14), the process proceeds to Step S17. When it is judged that the display is not by 4:3 aspect ratio (N in S 14), the process proceeds to Step S15.

In Step S15, it is judged whether or not broadcasting is for 16:9 aspect ratio based on the image signal V. When it is judged that the broadcasting is not for 16:9 aspect ratio (N in S15), the process proceeds to Step S18. When it is judged that the broadcasting is for 16:9 aspect ratio (Y in S15), the process proceeds to Step S16.

In Step S16, it is judged whether or not effective screen is for 4:3 aspect ratio based on the image signal V. When it is judged that the effective screen is for 4:3 aspect ratio (Y in S16), a process of reducing right/left burn-in is set in Step S17, and the process proceeds to Step S19. When it is judged that the effective screen is not for 4:3 aspect ratio (N in S16), an invalidity of reducing burn-in is set in Step S18, and the process proceeds to Step S19.

In Step S19, when the process of reducing burn-in is set, the contrast control unit 14 or the resizing unit 15 is required to interpose the brightness gradation area E3. When the invalidity of reducing burn-in is set, the contrast control unit 14 or the resizing unit 15 is required to stop interposing the brightness gradation area E3, and the process is finished.

The contrast control unit 14 or the resizing unit 15 required to interpose the brightness gradation area E3 processes the image signal V so as to interpose the brightness gradation area E3 in a predetermined location. The contrast control unit 14 or the resizing unit 15 required to finish interposing the brightness gradation area E3 finishes processing the image signal V to interpose the brightness gradation area E3.

One embodiment of operations (actions) of the above image system 1 will be described hereafter. Fig. 3 shows the display image by process of reducing right/left burn-in, and Fig. 4 is the display image by process of reducing top/bottom burn-in.

Broadcasting signal is received by the receiving unit 5, and the image signal V carried by the broadcasting signal is inputted to the image signal detecting unit 12 of the image signal processing apparatus 10. When the blank area datum for the blank area E2 is detected, a type of the process of reducing burn-in is specified based on the blank area E2.

When it is judged that the type is the process of reducing right/left burn-in, the contrast control unit 14 processes the image signal V so as to interpose respectively the brightness gradation areas E3 from the right and left boundaries 22 of the effective screen G1 into the image area E1 as shown in Fig. 3, and outputs the processed image signal V through the resizing unit 15 toward the display unit 20. Thereby, the 16:9 display 21 of the display unit 20 shows the image area E1 provided in the center thereof, and two brightness gradation areas E3 provided from the boundary 22 between the image area E1 and the blank area E2 into the image area E1 so as to decrease the brightness in the brightness gradation area E3 gradually from the image area E1 toward the blank area E2.

When it is judged that the type is the process of reducing top/bottom burn-in, the resizing unit 15 processes the image signal V so as to interpose respectively the brightness gradation areas E3 from the top and bottom boundaries 22 of the effective screens G2, G3 into the blank area E2 as shown in Fig. 4, and outputs the processed image signal to the display unit 20. Thereby, the 16:9 display 21 of the display unit 20 shows the image area E1 provided in the center thereof, and two brightness gradation areas E3 provided from the boundary 22 between the image area E1 and the blank area E2 into the blank area E2 so as to decrease the brightness in the brightness gradation area E3 gradually from the image area E1 toward the blank area E2.

According to the aforesaid image system 1, the image signal processing apparatus 10 processes the image signal so as to interpose the brightness gradation area E3 between the image area E1 and the blank area E2, and the display unit 20 display the image by the processed image signal. Thereby, the brightness between the image area E! and the blank area E2 can be reduced gradually by the brightness gradation area E3, so that the boundary 22 between the image area E1 and the blank area E2 can be ignorable when the brightness of the display unit 20 decreases. Since the brightness in the brightness gradation area E3 is reduced gradually, the power consumption can be reduced. Thus, the burn-in, that is the difference of brightness reduction can be ignorable and the power consumption can be reduced.

In the above embodiment, when one effective screen G1 is displayed as shown in Fig. 3, the brightness gradation area E3 is provided in the image area E1, but can be provided out of the image area E1, that is in the blank area E2. Similarly, when two effective screens G2, G3 is displayed as shown in Fig. 4, the brightness gradation area E3 is provided in the blank area E2, but can be provided out of the blank area E2, that is in the image area E1.

In the above embodiment, the case when the blank area E2 is displayed with a black color is described, but the blank area E2 can be displayed with a gray color and .a design pattern. In the case, the gradation of the brightness in the brightness gradation area E3 is determined by the brightness of the blank area E2 and the image area E1.

In the above embodiment, the case when the blank areas E2 are provided at the right/left sides of the image area E1 or at the top/bottom sides of the image area E1 is described. When the blank areas E2 are provided at the right/ left and top/bottom sides of the image area E1, by providing the brightness gradation areas E3 between the image area E1 and the each blank area E2, the burn-in, that is the difference of brightness reduction can be ignorable and the power consumption can be reduced.

While, in the embodiment, the present invention is described, it is not limited thereto. Various change and modifications can be made with the scope of the present invention.

**Claims**

1. An image signal processing apparatus, which executes image processing for an image signal including an image datum for an image displayed in an image area on a display and a blank area datum for a blank displayed in a blank area other than the image area on the display, comprising:

   a blank area detecting unit for detecting the blank area datum of the image signal; and
   an image signal processing unit for processing the image signal so as to provide a brightness gradation area between the image area and the blank area on the display,

   wherein brightness in the brightness gradation area changes gradually between the image area and the blank area corresponding to detection of the blank area datum by the blank area detecting unit.

2. The image signal processing apparatus according to claim 1, wherein the image signal processing unit processes the image signal so as to display the brightness gradation area, the brightness in which decreases gradually from a bright zone to a dark zone in the brightness gradation area.

3. The image signal processing apparatus according to claim 1, wherein the image signal processing unit processes the image signal so as to provide the brightness gradation area from a boundary between the image area and the blank area into the image area.

4. The image signal processing apparatus according to claim 1, wherein the image signal processing unit processes the image signal so as to provide the brightness gradation area from a boundary between the image area and the blank area into the blank area.

5. The image signal processing apparatus according to claim 1 further comprising:

   a display time measuring unit for measuring each accumulated display time of displaying the image area and the blank area in the image signal,

   wherein the image signal processing unit processes the image signal so as to control the brightness in the brightness gradation area based on the accumulated display time measured by the display time measuring unit.

6. An image system comprising:

   an image signal processing apparatus claimed in claim 1; and
   a display unit for displaying the image by the image signal processed by the image signal processing apparatus.

7. A method of processing an image signal, which includes an image datum for an image displayed in an image area on a display and a blank area datum for a blank displayed in a blank area other than the image area on the display, comprising the steps of:

detecting the blank area datum of the image signal; and
processing the image signal so as to provide a brightness gradation area between the image area and the blank area on the display, wherein brightness in the brightness gradation area changes gradually between the image area and the blank area corresponding to detection of the blank area datum.

8. The image signal processing apparatus according to claim 2, wherein the image signal processing unit processes the image signal so as to provide the brightness gradation area from a boundary between the image area and the blank area into the image area.

9. The image signal processing apparatus according to claim 2, wherein the image signal processing unit processes the image signal so as to provide the brightness gradation area from a boundary between the image area and the blank area into the blank area.

10. The image signal processing apparatus according to claim 2 further comprising:

a display time measuring unit for measuring each accumulated display time of displaying the image area and the blank area in the image signal,

wherein the image signal processing unit processes the image signal so as to control the brightness in the brightness gradation area based on the accumulated display time measured by the display time measuring unit.

11. The image signal processing apparatus according to claim 3 further comprising:

a display time measuring unit for measuring each accumulated display time of displaying the image area and the blank area in the image signal,

wherein the image signal processing unit processes the image signal so as to control the brightness in the brightness gradation area based on the accumulated display time measured by the display time measuring unit.

12. The image signal processing apparatus according to claim 4 further comprising:

a display time measuring unit for measuring each accumulated display time of displaying the image area and the blank area in the image signal,

wherein the image signal processing unit processes the image signal so as to control the brightness in the brightness gradation area based on the accumulated display time measured by the display time measuring unit.

13. The image signal processing apparatus according to claim 8 further comprising:

a display time measuring unit for measuring each accumulated display time of displaying the image area and the blank area in the image signal,

wherein the image signal processing unit processes the image signal so as to control the brightness in the brightness gradation area based on the accumulated display time measured by the display time measuring unit.

14. The image signal processing apparatus according to claim 9 further comprising:

a display time measuring unit for measuring each accumulated display time of displaying the image area and the blank area in the image signal,

wherein the image signal processing unit processes the image signal so as to control the brightness in the brightness gradation area based on the accumulated display time measured by the display time measuring unit.

15. An image system comprising:

an image signal processing apparatus claimed in claim 2; and

a display unit for displaying the image by the image signal processed by the image signal processing apparatus.

**16.** An image system comprising:

an image signal processing apparatus claimed in claim 3; and
a display unit for displaying the image by the image signal processed by the image signal processing apparatus.

**17.** An image system comprising:

an image signal processing apparatus claimed in claim 4; and
a display unit for displaying the image by the image signal processed by the image signal processing apparatus.

**18.** An image system comprising:

an image signal processing apparatus claimed in claim 5; and
a display unit for displaying the image by the image signal processed by the image signal processing apparatus.

**19.** An image system comprising:

an image signal processing apparatus claimed in claim 8; and
a display unit for displaying the image by the image signal processed by the image signal processing apparatus.

**20.** An image system comprising:

an image signal processing apparatus claimed in claim 9; and
a display unit for displaying the image by the image signal processed by the image signal processing apparatus.

**21.** An image system comprising:

an image signal processing apparatus claimed in claim 10; and
a display unit for displaying the image by the image signal processed by the image signal processing apparatus.

**22.** An image system comprising:

an image signal processing apparatus claimed in claim 11; and
a display unit for displaying the image by the image signal processed by the image signal processing apparatus.

**23.** An image system comprising:

an image signal processing apparatus claimed in claim 12; and
a display unit for displaying the image by the image signal processed by the image signal processing apparatus.

**24.** An image system comprising:

an image signal processing apparatus claimed in claim 13; and
a display unit for displaying the image by the image signal processed by the image signal processing apparatus.

**25.** An image system comprising

an image signal processing apparatus claimed in claim 14; and
a display unit for displaying the image by the image signal processed by the image signal processing apparatus.

# FIG. 1

EP 1 841 203 A1

# FIG. 2

EP 1 841 203 A1

1 : IMEGE SYSTEM

# FIG. 3

EFFECTIVE SCREEN G1

# FIG. 4

EFFECTIVE SCREEN G2   EFFECTIVE SCREEN G3

# FIG. 5

21

| D | C | D |
| B | A | B |
| D | C | D |

# FIG. 6

EXPECTED BRIGHTNESS

100%

50%

OPERATING TIME

36000H

# FIG. 7

```
         ┌─────────────────────┐
         │     PROCESS OF      │
         │  REDUCING BURN-IN   │
         └─────────────────────┘
                   │
                   ▼            S11
              ╱─────────────╲        N
         ╱    FUNCTION      ╲───────────────┐
         ╲  OF REDUCING BURN-IN ╱            │
              ╲    ON?    ╱                  │
                ╲─────╱                     ▼
                   │ Y                    ( 1 )
                   ▼            S12
              ╱─────────────╲      Y
         ╱   DISPLAY MODE   ╲──────────────┐
         ╲    2 SCREENS ?   ╱              │
              ╲─────╱                      ▼
                   │ N                ┌──────────────────────┐
                   ▼            S14    │ SET PROCESS OF REDUCING │   S13
       Y      ╱─────────────╲         │   TOP/BOTTOM BURN-IN    │
   ┌─────────╲  DISPLAY BY 4:3 ? ╱    └──────────────────────┘
   │          ╲─────╱                     │
   │             │ N                      ▼
   │             ▼            S15        ( 2 )
   │        ╱─────────────╲      N
   │   ╱    BROADCASTING   ╲──────────────────────────────────( 1 )
   │   ╲     FOR 16:9 ?    ╱                    │
   │        ╲─────╱                             │
   │           │ Y                              │
   │           ▼            S16                 │
   │      ╱─────────────╲      N                │
   │  ╱   EFFECTIVE SCREEN ╲──────────┐         │
   │  ╲     FOR 4:3 ?     ╱           │         │
   │      ╲─────╱                     ▼         │
   │         │ Y                      │         │
   └─────────┤                        │         │
             ▼          S17           ▼         ▼           S18
   ┌──────────────────────┐      ┌──────────────────────┐
   │ SET PROCESS OF REDUCING │    │    SET INVALIDITY OF    │
   │   RIGHT/LEET BURN-IN    │    │    REDUCING BURN-IN     │
   └──────────────────────┘      └──────────────────────┘
             │                             │
             │◄────────────────────────────┴──────────( 2 )
             ▼
   ┌──────────────────────┐  S19
   │  REQUEST TO INTERPOSE  │
   │ BRIGHTNESS GRADATION   │
   │        AREA            │
   └──────────────────────┘
             │
             ▼
         ┌────────┐
         │  END   │
         └────────┘
```

**European Patent Office**

## EUROPEAN SEARCH REPORT

Application Number

EP 07 00 6437

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2001 175212 A (FUJITSU GENERAL LTD) 29 June 2001 (2001-06-29) * paragraphs [0024], [0025]; claim 1; figure 2 * | 1-25 | INV. H04N3/20 H04N5/44 G09G3/28 |
| A | WO 01/24516 A (SONY ELECTRONICS INC [US]) 5 April 2001 (2001-04-05) * the whole document * | 1-25 | |
| A | US 2004/100584 A1 (TAKAGI TOSHIHIRO [JP] ET AL) 27 May 2004 (2004-05-27) * the whole document * | 1-25 | |
| A | EP 0 913 993 A (THOMSON BRANDT GMBH [DE]) 6 May 1999 (1999-05-06) * the whole document * | 1-25 | |

TECHNICAL FIELDS SEARCHED (IPC)

H04N
G09G

The present search report has been drawn up for all claims

| Place of search | Date of completion of the search | Examiner |
|---|---|---|
| Munich | 16 August 2007 | Rolet, Etienne |

**ANNEX TO THE EUROPEAN SEARCH REPORT
ON EUROPEAN PATENT APPLICATION NO.**                    EP 07 00 6437

This annex lists the patent family members relating to the patent documents cited in  the above-mentioned European search report.
The members are as contained in the European Patent Office EDP file on
The European Patent Office is in no way liable for these particulars which are merely given for the purpose of information.

16-08-2007

| Patent document cited in search report | Publication date | Patent family member(s) | | Publication date |
|---|---|---|---|---|
| JP 2001175212    A | 29-06-2001 | NONE | | |
| WO 0124516    A | 05-04-2001 | AU | 7595800 A | 30-04-2001 |
| | | US | 6323915 B1 | 27-11-2001 |
| US 2004100584    A1 | 27-05-2004 | JP | 3664251 B2 | 22-06-2005 |
| | | JP | 2004159081 A | 03-06-2004 |
| EP 0913993    A | 06-05-1999 | CN | 1220546 A | 23-06-1999 |
| | | JP | 11205714 A | 30-07-1999 |
| | | US | 6366706 B1 | 02-04-2002 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005323147 A